Europäisches Patentamt

(19) European Patent Office

Office européen des brevets

(11) Numéro de publication: **0 289 389**
**B1**

(12) **FASCICULE DE BREVET EUROPEEN**

(45) Date de publication du fascicule du brevet:
**27.12.90**

(21) Numéro de dépôt: **88400926.7**

(22) Date de dépôt: **15.04.88**

(51) Int. Cl.⁵: **B23Q 17/22,** B23Q 9/02,
B23B 5/16

54 **Dispositif de réglage de la position de travail d'une machine d'usinage d'un chanfrein et utilisation de ce dispositif.**

(30) Priorité: **27.04.87 FR 8705935**

(43) Date de publication de la demande:
**02.11.88 Bulletin 88/44**

(45) Mention de la délivrance du brevet:
**27.12.90 Bulletin 90/52**

(84) Etats contractants désignés:
**BE CH DE ES LI SE**

56 Documents cités:
**DE-A- 2 312 786**
**DE-C- 837 637**
**FR-A- 2 049 303**
**FR-A- 2 544 269**
**FR-A- 2 593 732**
**JP-A-59 129 636**
**US-A- 3 477 341**
**US-A- 3 550 488**
**US-A- 3 687 007**

(73) Titulaire: **FRAMATOME, Tour Fiat 1, Place de la Coupole,
F-92400 Courbevoie(FR)**

(72) Inventeur: **Martin, Alain, 133 rue Coste,
F-69300 Caluire(FR)**

(74) Mandataire: **Bouget, Lucien et al, Cabinet
Lavoix 2, Place d'Estienne d'Orves, F-75441 Paris
Cédex 09(FR)**

## Description

L'invention concerne une machine d'usinage d'un chanfrein sur une partie à symétrie de révolution d'une pièce creuse comportant un dispositif de réglage de sa position de travail et de l'orientation de son axe de rotation.

Les réacteurs nucléaires à eau sous pression comportent une cuve renfermant le cœur du réacteur et remplie d'eau sous pression ainsi qu'un circuit primaire constitué de plusieurs boucles en communication avec la cuve pour permettre la circulation de l'eau sous pression et son refroidissement à l'extérieur de la cuve. Chacune des boucles du circuit primaire comporte un générateur de vapeur dans lequel l'eau sous pression se refroidit: en échauffant et en vaporisant de l'eau alimentaire. Les générateurs de vapeur de chacune des boucles sont reliés à la cuve par des canalisations d'arrivée et de sortie d'eau sous pression appelées conduites primaires.

Après un certain temps de fonctionnement les générateurs de vapeur qui renferment un faisceau de tubes d'échange thermique assurant la séparation entre l'eau primaire et l'eau d'alimentation doivent être contrôlés et si certains tubes du faisceau présentent des fuites, ces tubes doivent être fermés par un bouchon ou chemises pour éviter la contamination de l'eau d'alimentation.

Lorsque le générateur de vapeur a fonctionné pendant une longue durée il peut s'avérer nécessaire de remplacer tout ou partie des tubes du faisceau.

Cependant cette opération est complexe si bien qu'on envisage actuellement le remplacement intégral des générateurs de vapeur des réacteurs nucléaires à eau sous pression.

Cette opération de remplacement nécessite un découpage des canalisations primaires au voisinage des tubulures de raccordement du générateur usagé et un soudage des tubulures du générateur de vapeur neuf aux canalisations primaires laissées en attente. Avant d'effectuer le soudage de raccordement entre les tubulures du générateur neuf et les canalisations du circuit primaire, ces tubulures et canalisations étant de forte épaisseur, il est nécessaire de réaliser l'usinage de chanfreins d'une forme particulière sur les extrémités des canalisations primaires, ces chanfreins venant en coïncidence, pour le raccordement, avec des chanfreins usinés à l'extrémité des tubulures de raccordement du générateur neuf, lors de sa fabrication.

Le découpage des canalisations primaires effectué avant le démontage du générateur de vapeur usagé est réalisé de façon qu'une partie d'extrémité de chacune des canalisations primaires symétrique de révolution autour de l'axe de la canalisation puisse être usinée pour la réalisation d'un chanfrein ayant une position et une orientation permettant sa mise en coïncidence parfaite avec le chanfrein correspondant de la tubulure du générateur de vapeur neuf.

L'usinage d'un chanfrein sur l'extrémité des canalisations primaires, dans une position et avec une orientation permettant une parfaite mise en coïncidence avec les parties de raccordement du générateur de vapeur neuf est une opération très difficile à réaliser qui nécessite l'utilisation de moyens parfaitement adaptés aux caractéristiques du générateur de vapeur neuf.

On assure la mise en place dans le bâtiment du réacteur de moyens de supportage du générateur de vapeur qui permettent de définir, avec la connaissance précise des caractéristiques du générateur de vapeur neuf sortant d'usine, la position et l'orientation des éléments de raccordement de la partie primaire du générateur de vapeur.

La position exacte des surfaces de raccordement des chanfreins des tubulures primaires peut être matérialisée grâce à un gabarit ou mannequin reproduisant les caractéristiques du fond du générateur de vapeur sur lequel sont fixées les tubulures primaires. En particulier, la position des plans de raccordement des chanfreins peut être matérialisée par un élément comportant des moyens de traçage qui se trouvent situés exactement dans le plan de raccordement, lorsque le mannequin est mis en position sur les supports du générateur de vapeur. Il est alors possible de tracer, sur la surface extérieure de la canalisation primaire en attente, une ligne correspondant à la section de cette canalisation par le plan de raccordement de la tubulure. Cette ligne matérialise, sur la canalisation primaire, la position de la face d'extrémité du chanfrein à usiner.

Pour usiner un chanfrein sur une partie symétrique de révolution d'une pièce creuse telle qu'une canalisation primaire, dont le diamètre est de l'ordre de 700 mm, on peut utiliser une machine comportant un corps muni de moyens pour sa fixation à l'intérieur de la pièce creuse et sur lequel est montée une partie mobile en rotation portant l'outillage d'usinage du chanfrein. La position du corps fixe à l'intérieur de la pièce creuse qui est réglable permet de définir la position de l'axe de rotation de la partie mobile d'usinage, par rapport à la partie à usiner de la pièce creuse.

Le, plan de raccordement du chanfrein est généralement incliné par rapport aux plans de section droite de la partie de la pièce à usiner, perpendiculaires à l'axe de révolution.

De plus, la position du chanfrein de la tubulure du générateur de vapeur peut nécessiter un décentrage du chanfrein cie la conduite primaire par rapport à la partie de la conduite à usiner. L'axe d'usinage et l'axe de révolution de la pièce ne sont donc généralement pas confondus.

Il est donc très difficile d'assurer un réglage de la position de travail de la machine d'usinage du chanfrein.

On connaît par le US-A 3 477 341, une machine portative pour réaliser un usinage sur une pièce tubulaire qui assure le support de la machine pendant l'usinage. La machine comporte un dispositif de réglage constitué par un ensemble de forme annulaire et des moyens de déplacement, dans au moins deux directions du plan d'un anneau de référence.

Un tel dispositif ne permet cependant pas de régler la position et l'orientation de l'axe de rotation de la machine pour le placer dans une position voulue par rapport à l'axe de la pièce à usiner.

Le but de l'invention est donc de proposer une machine d'usinage d'un chanfrein sur une partie à symétrie de révolution d'une pièce creuse, cette machine d'usinage pouvant être facilement mise en position et orientée quelles que soient : la position et l'inclinaison du plan d'extrémité du chanfrein et quelle que soit l'inclinaison de l'axe d'usinage, par rapport à l'axe de révolution de la partie à usiner.

Dans ce but, la machine comporte un corps muni de moyens de fixation réglables dans la pièce creuse définissant l'axe de rotation de la machine et une partie montée mobile en rotation autour de l'axe sur le corps et portant l'outillage d'usinage du chanfrein ainsi qu'un dispositif de réglage de la position de travail et de l'orientation de l'axe de rotation de la machine, le dispositif de réglage étant constitué par un ensemble de forme annulaire dont le diamètre intérieur est supérieur au diamètre extérieur de la partie de la pièce à usiner, comportant:

– un premier anneau appelé anneau de support comportant des moyens de fixation sur la pièce creuse autour de la partie à usiner et des moyens de réglage à vis venant en appui sur la pièce creuse pour le réglage de position de l'anneau de support dans au moins deux directions perpendiculaires à l'axe de révolution de la partie à usiner, ainsi qu'au moins trois ensembles de support réglables régulièrement répartis suivant la circonférence de l'anneau de support,
– un second anneau ou anneau d'orientation ayant une face plane, porté par l'anneau de support par l'intermédiaire des ensembles de support de longueur réglable permettant de régler la position de l'anneau d'orientation dans la direction de l'axe de révolution de la partie à usiner et son orientation par rapport aux plans de section droite de la partie à usiner, perpendiculaires à l'axe de révolution,
– et un troisième anneau ou anneau de réglage porté par l'anneau d'orientation et muni de moyens pour son déplacement dans au moins deux directions du plan de l'anneau d'orientation et de moyens pour sa fixation sur l'anneau d'orientation, l'anneau de réglage comportant de plus, sur une partie au moins de sa face plane opposée au plan de l'anneau d'orientation et sur une partie au moins de sa surface latérale, des zones ayant une tres grande qualité de surface pour constituer deux surfaces de référence de réglage de la machine d'usinage, et par une équerre destinée à être fixée sur la partie de la machine, mobile en rotation, à la place de l'outillage portant deux comparateurs placés chacun sur une des branches de l'équerre pour venir en contact respectivement avec la partie de la face plane et avec la partie de la surface latérale de l'anneau de réglage constituant les surfaces de référence pour permettre le réglage de l'axe de rotation de la machine pendant sa rotation à vitesse lente, grâce aux moyens de fixation réglables.

Afin de bien faire comprendre l'invention, on va maintenant décrire, à titre d'exemple non limitatif, en se référant aux figures jointes en annexe, un mode de réalisation d'un dispositif de réglage suivant l'invention et son utilisation pour le réglage de position d'une machine d'usinage d'un chanfrein sur une canalisation primaire d'un réacteur nucléaire à eau sous pression.

La figure 1 est une vue en élévation schématique de la partie inférieure d'un générateur de vapeur et des conduites primaires reliées à ce générateur de vapeur.

La figure 2 est une vue en coupe de l'extrémité d'une conduite primaire dans sa partie de raccordement au générateur de vapeur.

La figure 3 est une vue en perspective éclatée du dispositif de rélage suivant l'invention.

La figure 4 est une vue en perspective de l'anneau de support du dispositif de réglage suivant l'invention pendant sa mise en place sur une conduite primaire à usiner.

La figure 4a est une vue en coupe d'un moyen de fixation provisoire de l'anneau de support représenté sur la figure 4.

La figure 4b est une vue en coupe d'un moyen de fixation et de centrage de l'anneau de support représenté sur la figure 4.

La figure 5 est une demi-vue en coupe par un plan radial, au niveau d'un ensemble de support, du dispositif de réglage représenté sur la figure 3, après assemblage de ses éléments constituants.

La figure 6 est une demi-vu en coupe par un plan radial de l'anneau d'orientation et de l'anneau de réglage, au niveau d'une vis de positionnement de l'anneau de réglage.

La figure 7 est une demi-vue en coupe par un plan radial de l'anneau d'orientation et de l'anneau de réglage, au niveau d'un dispositif de fixation de l'anneau de réglage.

La figure 8a est une demi-vue en coupe schématique montrant le dispositif de réglage dans sa position initiale.

La figure 8b est une demi-vue en coupe montrant le dispositif de réglage dans sa position finale permettant le réglage de la machine d'usinage.

La figure 9 est une vue en perspective du corps de la machine d'usinage de chanfrein en position à l'intérieur de la conduite primaire sur laquelle on réalise le chanfrein.

La figure 10 est une vue en coupe de la machine d'usinage pendant son réglage, en utilisant le dispositif suivant l'invention.

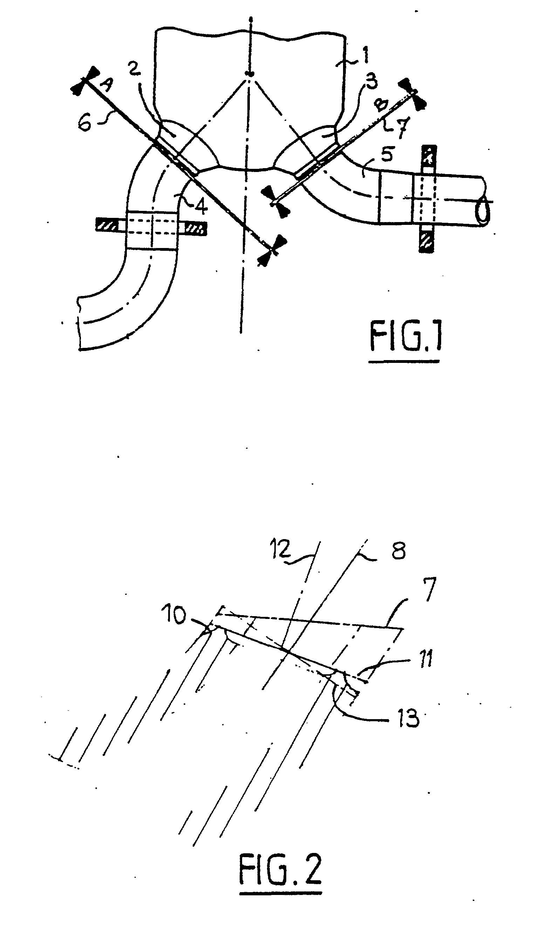

Sur la figure 1, on voit le fond d'un générateur de vapeur 1 d'un réacteur nucléaire à eau sous pression comportant deux tubulures 2 et 3 de raccordement des conduites 4 et 5 du circuit primaire du réacteur.

Pour réaliser le changement du générateur de vapeur, on effectue la coupe des conduites primaires 4 et 5 suivant les plans de coupe 6 et 7.

Le générateur de vapeur est ensuite séparé des conduites primaires qui restent en place dans le bâtiment du réacteur.

Sur la figure 2, on a représenté l'une des conduites primaires 5 en attente après découpage suivant le plan de section 7. La canalisation 5 est de forme courbe et son extrémité voisine du plan de coupe 7 constitue une partie sensiblement symétrique de révolution autour d'un axe 8 dans laquelle doit être usiné le chanfrein dont la forme et la position sont représentés par la ligne en traits interrompus 10. On a également figuré en traits interrompus la trace 11 du plan de raccordement correspondant à la face d'extrémité du chanfrein. Ce plan de raccordement est matérialisé par une ligne continue tracée sur la surface externe de la canalisation 5. Ce tracé est obtenu, comme indiqué plus haut, grâce à un mannequin reproduisant la partie inférieure du générateur de vapeur et comportant des éléments de marquage.

Le plan 11 et situé en retrait par rapport au plan de section 7 fait un certain angle avec ce plan. Le plan 11 est généralement distinct du plan de section droite 13 de la canalisation, perpendiculaire à l'axe 8, dans la zone d'extrémité du chanfrein. Enfin, l'axe d'usinage 12 du chanfrein perpendiculaire au plan 11 et qui constitue l'axe de révolution de ce chanfrein 10 peut être légèrement décalé par rapport au centre de la canalisation par lequel passe l'axe 8 de cette canalisation. La position exacte du chanfrein et de son axe de révolution 12 est déterminée par des mesures topométriques sur les éléments assurant la mise en place du générateur neuf et en utilisant les données géométriques et les cotes exactes relatives au générateur neuf sortant d'usine.

Le dispositif de réglage suivant l'invention qui va être décrit ci-dessous permet de régler la position de travail de la machine d'usinage du chanfrein 10 dans la canalisation 5 et d'orienter l'axe de rotation de sa partie mobile, suivant l'axe théorique 12 du chanfrein déterminé par topométrie.

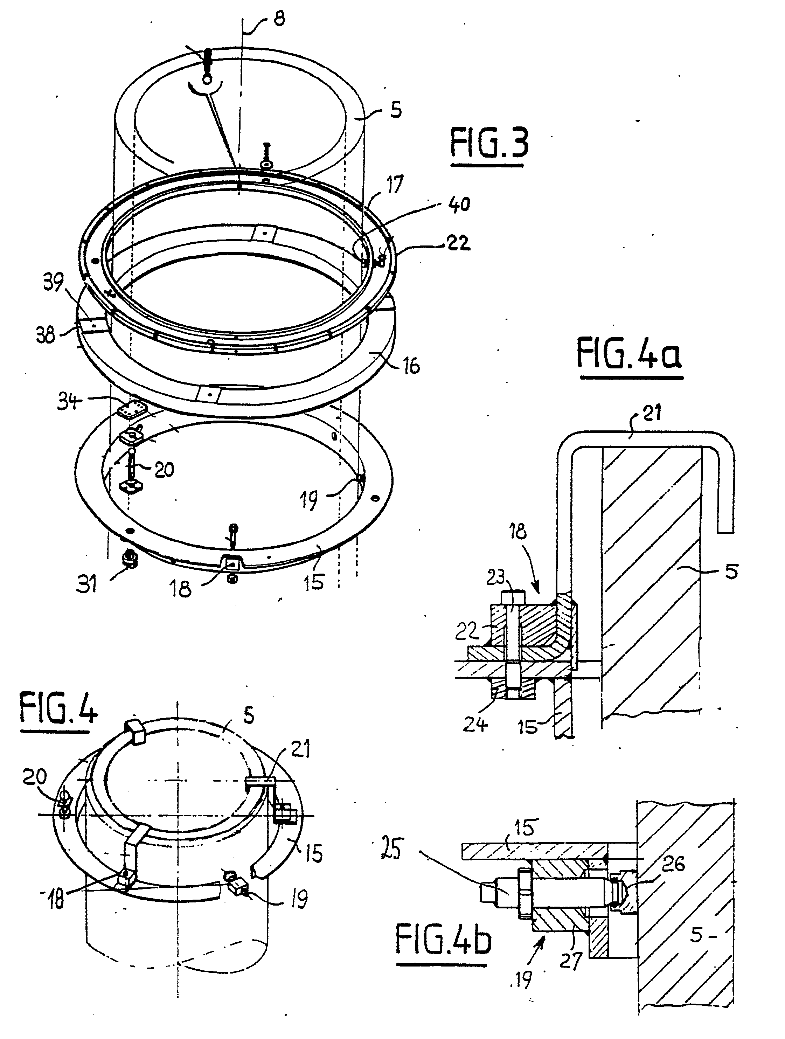

Sur la figure 3, on voit l'ensemble des éléments du dispositif suivant l'invention, en position autour de la canalisation 5 et avant montage. Cet ensemble comporte trois anneaux 15, 16 et 17 superposés dont le diamètre intérieur est supérieur au diamètre extérieur de la canalisation 5. L'anneau 15, situé à la partie inférieure du dispositif sur la figure 3 est un anneau de support comportant trois éléments de suspension 18 placés à 120° les uns des autres sur sa périphérie et huit dispositifs de centrage et de fixation 19 également placés à 45° les uns des autres à la périphérie de l'anneau 15. Les éléments de suspension 18 et les dispositifs 19 sont placés en des positions décalées les unes par rapport aux autres, comme il est visible sur la figure 4. Ces éléments sont représentés en détail sur les figures 4a et 4b.

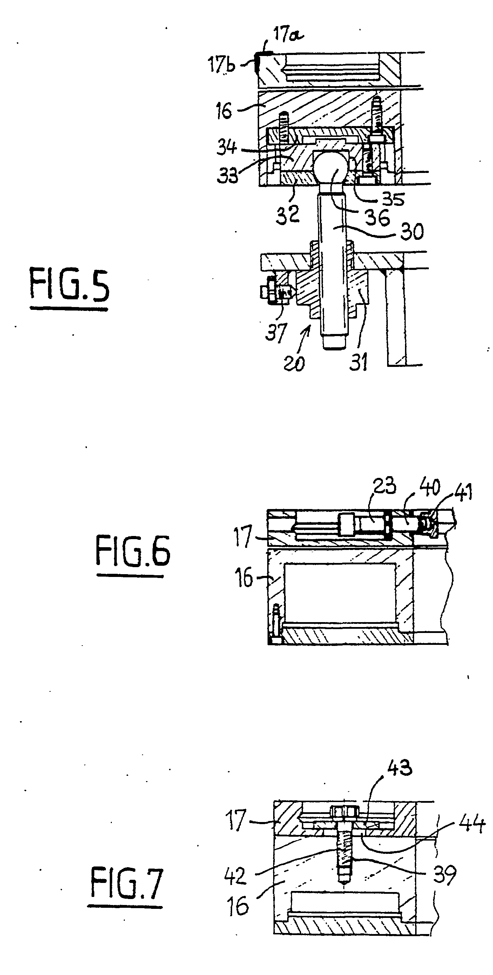

L'anneau 15 comporte également trois éléments de support 20 situés dans des positions à 120° les unes des autres suivant la circonférence de l'anneau 15. Ces ensembles de support 20 à vis et à rotules sont visibles de façon plus détaillée sur la figure 5.

Sur les figures 4, 4a et 4b, on voit les éléments de suspension et de fixation de l'anneau de support 15 sur la canalisation 5.

Les éléments de suspension 18 comportent chacun une équerre 21 dont la partie supérieure en forme de U vient reposer sur l'extrémité de la canalisation 5 pour assurer la suspension provisoire de l'anneau de support 15 et un pied de fixation 22 soudé sur la partie inférieure de l'équerre 21. Le pied 22 et l'équerre sont traversées par des ouvertures qui sont mises en alignement avec une ouverture correspondante dans l'anneau 15 pour permettre le passage d'une vis de fixation 23 qui coopère avec un écrou 24 pour assurer la fixation et la suspension de l'anneau 15. L'écrou 24 est fixé par soudage sur la face inférieure de l'anneau 15 et la vis 23 est montée de façon imperdable dans le pied de fixation 22.

Sur la figure 4, on a représenté l'anneau 15 en position suspendue sur une canalisation 5 de direction verticale. Cette mise en place provisoire de l'anneau 15, grâce aux ensembles de suspension 18, permet d'assurer son centrage et sa fixation définitive grâce aux huit dispositifs de centrage et de fixation 19 dont l'un a été représenté sur la figure 4b. Cet ensemble de fixation et de centrage comporte une vis 25 solidaire à son extrémité d'un patin 26 venant en appui pour le centrage et la fixation de l'anneau 15, contre la paroi extérieure de la canalisation 5. Chacune des vis à patin 25 coopère avec un écrou 27 solidaire de la partie inférieure de l'anneau 15 et placé avec son alésage taraudé dans la direction radiale de l'anneau 15.

Lorsque le centrage et la fixation de l'anneau de support 15 est assuré grâce aux trois ensembles 19, les éléments de suspension provisoire 18 sont démontés pour libérer la zone située à la périphérie de la canalisation 5, au-dessus de l'anneau 15.

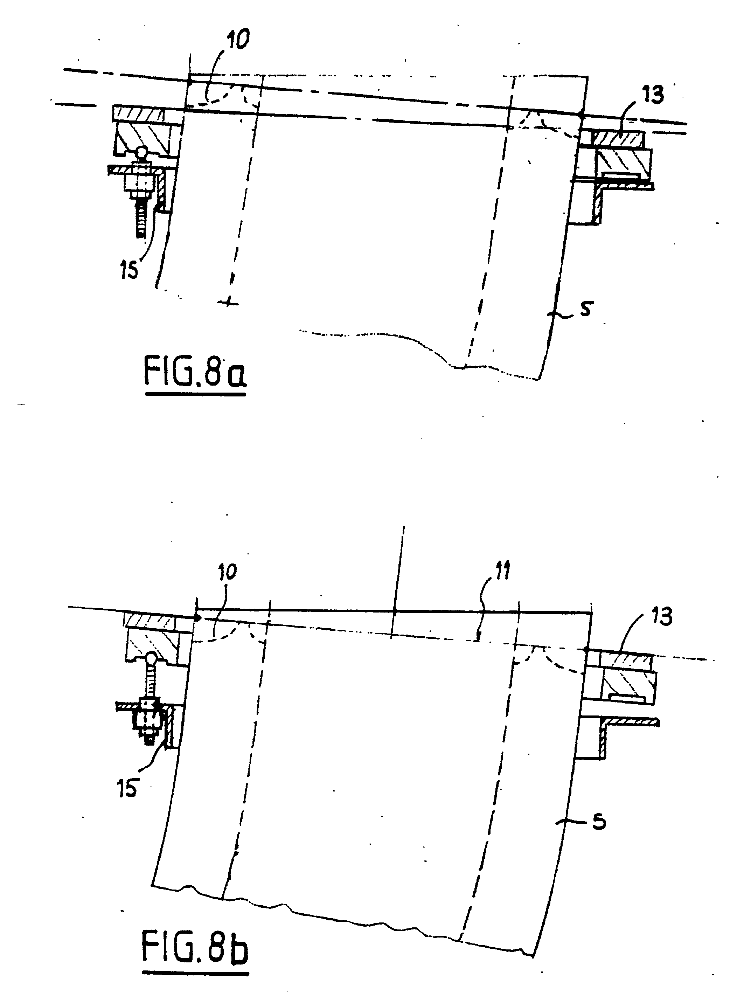

L'anneau 15 est mis en place un peu en-dessous de la zone de la canalisation 5 dans laquelle sera usiné le chanfrein 10, comme il est visible sur les figures 8a et 8b. Le centrage de l'anneau 15 par rapport à la canalisation 5 n'est effectué que de manière approximative.

Sur les figures 3 et 5, on voit les ensembles de support à vis et à rotules 20 qui permettent d'assurer le support et le réglage de position de l'anneau 16 ou anneau d'orientation, sur l'anneau de support 15.

Les ensembles de support 20 comportent une vis 30 dont la partie filetée est engagée dans un écrou 31 monté rotatif dans une ouverture traversant l'anneau 15 de façon que la rotation de l'écrou 31 entraîne un déplacement de la vis 30 dans une direction perpendiculaire aux faces de l'anneau 15, c'est-à-dire dans une direction sensiblement parallèle à l'axe 8 de la canalisation 5. La vis 30 comporte une tête 30a constituant une rotule sphérique qui permet la liaison entre la vis 30 et la partie inférieure de l'anneau d'orientation 16. L'anneau 16 présente une forme profilée et comporte une partie creuse dirigée vers la face supérieure de l'anneau de support 15 par rapport à laquelle les parties des vis 30 comportant les rotules 30a sont saillantes. Les rotules sphériques 30a sont reçues dans un logement correspondant ménagé à l'intérieur de la partie creuse de l'anneau d'orientation 16 par un ensemble de plaquettes 32, 33 et 34. La plaquette 34 est fixée sur le fond de la partie creuse de l'anneau d'orientation 16. La plaquette 33 est fixée sur la plaquette 34 et la tête 30a de la vis 30 constituant la rotule est engagée dans une ouverture 35 de la plaquette 33. La plaquette 32 qui comporte une ouverture 36 de forme hémisphérique dans sa partie centrale est engagée sur la partie de la vis 30 opposée à la rotule 33 puis fixée en position grâce à des vis sur la plaquette 33. Les logements 35 et 36 des plaquettes 33 et 32 constituent le logement de la rotule 30a. L'anneau d'orientation 16 est ainsi supporté par les vis 30 et relié de façon articulée à chacune des vis.

Les trois ensembles de support réglables 20 situés à 120° sur l'anneau de support 15 permettent de régler la position et l'orientation de l'anneau 16 sur lequel repose l'anneau 17. Cet anneau constituant l'anneau de réglage repose sur des supports 38 usinés sur la surface supérieure de l'anneau 16 et légèrement saillants vers le haut par rapport à la face supérieure de l'anneau 16.

Comme il est visible sur les figures 8a et 8b, le déplacement des vis 30 et leur réglage permettent de placer le plan supérieur de l'anneau de ré glage 17 en concordance parfaite avec le plan de raccordement 11 du chanfrein 10.

Lorsque la mise en position parfaite de la face supérieure de l'anneau de réglage 17 est assurée, grâce au réglage des trois vis 30 disposées à 120° autour de l'anneau support 15, cette position de réglage des vis 30 est verrouillée grâce à des vis pointeaux telles que 37 représentées sur la figure 5, de direction radiale et engagées dans un trou taraudé ménagé dans une partie de l'anneau 15.

La face supérieure 17a de l'anneau de réglage 17 constitue par sa partie extérieure une surface de référence usinée avec une très grande qualité de surface. De même, la surface latérale 17b de l'anneau de réglage 17 constitue une surface de référence usinée avec une très grande qualité de surface.

La mise en coïncidence du plan de référence supérieur 17a de l'anneau 17 avec le plan de raccordement 11 du chanfrein étant réalisée, il reste à assurer la mise en position de l'anneau 17 définissant avec précision la position de l'axe d'usinage 12 perpendiculaire au plan de raccordement 11.

Pour cela, on utilise les moyens de réglage, de position et de fixation de l'anneau de réglage 17 représentés sur les figures 6 et 7.

Sur la figure 6, on voit une vis de réglage 40 de la position de l'anneau 17 qui est engagée dans un trou de direction radiale ménagé dans cet anneau et qui comporte un patin d'extrémité 41 destiné à venir en appui sur la surface extérieure de la canalisation 5. Quatre vis de réglage 40 sont disposées à 90° les unes des autres, suivant la circonférence de l'anneau de réglage 17. La manoeuvre de ces vis depuis la partie supérieure de l'anneau 17 permet de déplacer cet anneau dans deux directions à 90° du plan 11. On peut ainsi régler parfaitement la position de l'axe de l'anneau 17 perpendiculaire au plan de raccordement 11.

Comme on le verra plus loin, le réglage de la machine d'usinage permet de mettre en parfaite coïncidence la position de l'axe d'usinage 12 avec l'axe de l'anneau de réglage 17. L'axe de l'anneau de réglage 17 est défini comme l'axe de révolution de la surface latérale cylindrique 17b de cet anneau.

La mise en position de l'anneau de réglage 17 dans le plan 11 est définie par les mesures topométriques ayant permis de définir avec une très grande précision la position de l'axe d'usinage 12 du chanfrein.

Sur la figure 7, on a représenté les moyens de fixation de l'anneau de réglage 17 sur l'anneau d'orientation 16, lorsque le réglage de position de cet anneau 17 a été réalisé.

La fixation de l'anneau 17 sur l'anneau 16 est effectuée au niveau de chacun des supports 38 usinés sur la face supérieure de l'anneau d'orientation 16.

Un trou taraudé 39 est usiné dans l'anneau d'orientation 16, dans chacune des parties en saillie 38 constituant les supports de l'anneau de réglage 17.

Comme il est visible sur la figure 7, les moyens de fixation sont constitués par des vis 42 venant s'engager dans les trous taraudés 39 ménagés dans l'anneau d'orientation 16. Chacune des vis 42 traverse l'anneau de réglage 17 par une ouverture 44 dont les dimensions sont supérieures au diamètre de la vis 42. La tête de la vis 42 vient en appui sur l'anneau 17 par l'intermédiaire d'une rondelle 43 dont le diamètre est supérieur aux dimensions du trou 44. On peut donc réaliser la fixation de l'anneau de réglage 17 sur l'anneau d'orientation 16 malgré un certain décalage radial de ces deux anneaux l'un par rapport à l'autre obtenu lors du réglage de la position de l'axe de l'anneau 17 grâce aux vis 40.

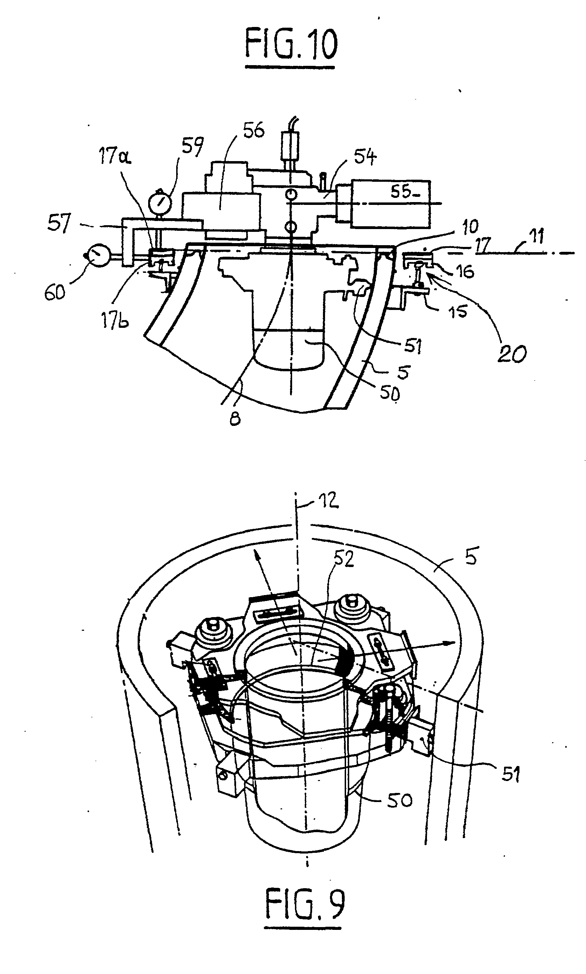

Sur la figure 9, on voit le corps 50 d'une machine d'usinage de chanfrein en position de travail à l'intérieur d'une conduite primaire 5 sur laquelle on veut réaliser un chanfrein dans une position parfaitement déterminée. Le corps 50 de la machine d'usinage du chanfrein comporte quatre patins 51 de réglage et de serrage disposés à 90° les uns des autres autour du corps 50 de la machine d'usinage.

Le corps 50 de la machine d'usinage comporte un alésage central 52 destiné à recevoir la partie rotative de la machine portant l'outillage d'usinage du chanfrein.

Lorsque la position du corps 50 de la machine à l'intérieur de la conduite 5 a été réglée, on effectue le serrage des patins 51 qui maintiennent le corps 50 en position fixe dans la conduite 5. L'axe 12 de l'alésage 52 correspond alors à l'axe d'usinage du chanfrein.

Pour effectuer le réglage de la position de travail et de l'orientation de l'axe de rotation de la machine de soudage, on utilise le dispositif de réglage suivant l'invention, comme représenté sur la figure 10.

Sur cette figure, le dispositif de réglage constitué par les anneaux 15, 16 et 17 a été représenté dans la position qu'il occupe après sa mise en place et son réglage, de la façon qui a été décrite ci-dessus. Dans cette position, la surface de référence 17a de la bague de réglage est en parfaite coïncidence avec le plan de raccordement 11 du chanfrein et la surface de référence cylindrique 17b a pour axe l'axe de symétrie de révolution du chanfrein 10 à usiner à l'extrémité de la conduite 5.

Le dispositif de réglage suivant l'invention permet de régler la position du corps 50 de la machine d'usinage dans la conduite 5, de façon que la partie mobile 54 de la machine d'usinage soit elle-même dans une position permettant un usinage d'un chanfrein 10 dans la position requise à l'extrémité de la conduite 5.

La partie mobile 54 de la machine d'usinage est montée rotative à l'intérieur de l'alésage 52, autour de l'axe de cet alésage.

Pour l'usinage du chanfrein, cette partie mobile est entraînée en rotation grâce à un moteur 55. La partie mobile 54 porte la tête d'usinage 56 sur laquelle est monté l'outil de coupe permettant l'usinage du chanfrein 10. La tête 56 comporte en particulier un mécanisme de déplacement de l'outil en plongée dans la direction de l'axe d'usinage, pour la réalisation du profil voulu pour le chanfrein.

Sur la figure 10, la machine d'usinage a été représentée pendant son réglage. Une équerre 57 sur laquelle sont fixés deux comparateurs 59 et 60 est, dans cette phase de réglage, fixée sur la tête d'usinage 56, à la place de l'outil de coupe. La tige du palpeur du comparateur 59 est placée dans une direction sensiblement parallèle à l'axe de rotation de la machine d'usinage et l'extrémité de cette tige vient en contact avec la surface de référence 17a qui est en parfaite coïncidence avec le plan de raccordement 11 du chanfrein 10. La mise en rotation à faible vitesse de la partie mobile 54 de la machine d'usinage permet de régler la position du corps 50 dans la canalisation 5 pour obtenir un parfait parallélisme du plan d'usinage et du plan 11. L'amplitude de déplacement en plongée de l'outil pour réaliser la face de raccordement du chanfrein peut également être déterminée de façon précise.

La tige du palpeur du comparateur 60 est placée dans une direction perpendiculaire à l'axe de rotation de la machine d'usinage et son extrémité vient en contact avec la surface de référence cylindrique 17b. Lors de la rotation à vitesse lente de la partie mobile 54 de la machine d'usinage, on peut ainsi régler la position de l'axe d'usinage 12, grâce aux patins de réglage 51 du corps 50 de la machine d'usinage.

La position de travail et l'orientation de l'axe d'usinage sont alors parfaitement réglées pour permettre l'usinage d'un chanfrein 10, dans la position requise à l'extrémité de la conduite 5.

Le dispositif suivant l'invention peut être mis en place très rapidement et très facilement sur la partie dont on assure l'usinage et ce dispositif permet un réglage rapide et très sûr de la position de travail de la machine d'usinage du chanfrein.

Le dispositif de réglage suivant l'invention peut être utilisé non seulement pour le réglage d'une machine d'usinage d'un chanfrein sur une conduite primaire d'un réacteur nucléaire à eau sous pression mais également pour le réglage de toute machine d'usinage d'un chanfrein sur une partie à symétrie de révolution d'une pièce creuse.

**Revendications**

1. Machine d'usinage d'un chanfrein (10) sur une partie à symétrie de révolution d'une pièce creuse (5), comportant un corps (50) muni de moyens de fixation réglables (51) dans la pièce creuse définissant l'axe de rotation (12) de la machine et une partie (54) montée mobile en rotation autour de l'axe (12) sur le corps (50) et portant l'outillage d'usinage du chanfrein ainsi qu'un dispositif de réglage de la position de travail et de l'orientation de l'axe de rotation de la machine, le dispositif de réglage étant constitué par un ensemble de forme annulaire dont le diamètre intérieur est supérieur au diamètre extérieur de la partie de la pièce (5) à usiner, comportant:

– un premier anneau (15) appelé anneau de support comportant des moyens de fixation (18, 19) sur la pièce creuse (5) autour de la partie à usiner et des moyens de réglage à vis (25) venant en appui sur la pièce creuse (5) pour le réglage de position de l'anneau de support (15) dans au moins deux directions perpendiculaires à l'axe de révolution de la partie à usiner, ainsi qu'au moins trois ensembles de support réglables (20) régulièrement répartis suivant la circonférence de l'anneau de support (15),

– un second anneau (16) ou anneau d'orientation ayant une face plane, porté par l'anneau de support (15) par l'intermédiaire des ensembles de support (20) de longueur réglable permet, tant de régler la position de l'anneau d'orientation (16) dans la direction de l'axe de révolution de la partie à usiner et son orientation par rapport aux plans cle section droite de la partie à usiner, perpendiculaires à l'axe de révolution,

– et un troisieme anneau (17) ou anneau de réglage porté par l'anneau d'orientation (16) et muni de moyens (40) pour son déplacement dans au moins deux directions du plan de l'anneau d'orientation et de moyens (42) pour sa fixation sur l'anneau d'orientation (16), l'anneau de réglage (17) comportant de plus, sur une partie (17a) au moins de sa face plane opposée au plan de l'anneau d'orientation (16) et sur une partie (17b) au moins de sa surface latérale, des zones ayant une très grande qualité de surface pour constituer deux surfaces de référence de réglage de la machine d'usinage, et par une équerre (57) destinée à etre fixée sur la partie (54) de la machine, mobile en rotation, à la place de l'outillage portant deux comparateurs placés chacun sur une des branches de l'équerre pour venir en contact respectivement avec la partie (17a) de la face plane et avec la partie (17b) de la surface latérale de l'anneau de réglage constituant les surfaces de référence pour permettre le réglage de l'axe de rotation de la machine pendant sa rotation à vitesse lente, grâce aux moyens de fixation réglables (51).

2. Machine suivant la revendication 1, caractérisée par le fait que l'anneau de support (15) comporte des moyens (18) de suspension à la pièce creuse (5) constitués chacun par une équerre (21) reliée à l'une de ses extrémités à l'anneau de support (15) et comportant à son autre extrémité une partie profilée destinée à reposer sur une partie d'extrémité de la pièce creuse (5).

3. Machine suivant l'une quelconque des revendications 1 et 2, caractérisée par le fait que les moyens de réglage à vis (19, 25) de la position de l'anneau de support (15) sont constitués par trois vis (25) engagées chacune dans un écrou (27) solidaire de l'anneau de support (15) et comportant un alésage taraudé de direction radiale, les écrous (27) étant disposés à 120° les uns des autres, suivant la circonférence de l'anneau (15) et les vis (25) étant solidaires d'un patin (26) à leur extrémité venant en appui sur la pièce creuse (5).

4. Machine suivant l'une quelconque des revendications 1, 2 et 3, caractérisée par le fait que les ensembles de support (20) de l'anneau d'orientation (16) sont constitués chacun par une vis (30) comportant une tête sphérique (30a) et un écrou (31) monté rotatif autour de son axe d'alésage sur l'anneau de support (15) en engagement avec la vis (30) de façon à déplacer, par sa rotation, dans une direction perpendiculaire au plan de l'anneau (15) correspondant sensiblement à la direction de l'axe de révolution de la partie à usiner, la tête (30a) de la vis montée articulée dans un palier d'articulation (32, 33) solidaire de l'anneau d'orientation (16).

5. Machine suivant la revendication 4, caractérisée par le fait que chacun des ensembles de support (20) comporte un vis pointeau (37) pour le blocage en rotation de l'écrou (31) de la vis (30).

6. Machine suivant l'une quelconque des revendications 1 à 5, caractériséepar le fait que les moyens (40) de déplacement de l'anneau de réglage (17) sont constitués par des vis (40) engagées chacune dans un trou taraudé de direction radiale de l'anneau (17) comportant chacune un patin (41) à son extrémité dirigée vers l'intérieur de l'anneau de réglage (17), pour la mise en appui de la vis, sur la pièce creuse (5).

7. Machine suivant l'une quelconque des revendications 1 à 6, caractérisée par le fait que les moyens de fixation de l'anneau de réglage (17) sur l'anneau d'orientation (16) sont constitués par des vis (42) traversant l'anneau de réglage dans une direction axiale par des trous (44) dont les dimensions sont supérieures au diamètre de la vis (42) qui comporte une tête venant en appui sur l'anneau de réglage (17), autour du trou (44), par l'intermédiaire d'une rondelle (43), l'anneau d'orientation (16) comportant des trous taraudés (39) destinés à coopérer avec les vis (42) pour la fixation de l'anneau de réglage (17).

8. Utilisation d'une machine suivant l'une quelconque des revendications 1 à 7 pour l'usinage d'un chanfrein de raccordement d'un générateur de vapeur, à l'extrémité d'une conduite primaire (5) d'un réacteur nucléaire à eau sous pression.

**Claims**

1. A machine for producing a chamfer (10) on a rotationally symmetrical part of a hollow workpiece (5), said machine comprising a body (50) provided with adjustable attachment means (51) for the hollow workpiece defining the axis of rotation (12) of the machine, and comprising a part (54) mounted for rotation about the axis (12) on the body (50) and carrying the chamfer machining tool, as well as a device for adjusting the working position and orientation of the rotation axis of the machine, the adjusting device consisting of an annular assembly the internal diameter of which is greater than the external diameter of the part of the workpiece (5) to be machined, and which comprises:

– a first ring (15), called the support ring, comprising means (18, 19) for attachment to the hollow workpiece (5) around the part to be machined, and screw adjustment means (25) bearing on the hollow workpiece (5) in order to adjust the position of the support ring (15) in at least two directions at right angles to the axis of revolution of the part to be machined, as well as at least three adjustable support assemblies (20) evenly spaced around the circumference of the support ring (15),

– a second ring (16), or guide ring, having a planar face and carried by the support ring (15) with the aid of support assemblies (20) of adjustable length enabling the position of the guide ring (16) to be adjusted in the direction of the rotation axis of the part to be machined and enabling its orientation to be adjusted in relation to the cross-sectional planes of the part to be machined which are perpendicular to the rotation axis,

– and a third ring (17), or adjustment ring, carried by the guide ring (16) and provided with means (40) for displacing it in at least two directions of the plane of the guide ring, and with means (42) for fixing it to the guide ring (16), the adjustment ring (17) additionally comprising, on at least a part (17a) of its planar face opposite the plane of the guide ring (16) and on at least a part (17b) of its side surface, zones having a very high-grade machined finish to constitute two reference surfaces for the adjustment of the chamfering machine, and by an angle member (57) adapted to be fixed to the part (54) of the machine, which is rotatable, instead of the tooling having two comparators each of which is placed on one arm of the angle member to make contact with, respectively, the part (17a) of the planar face and the part (17b) of the side face of the adjusting ring constituting the reference surfaces to allow the rotation axis of the machine to be adjusted while it is rotating at low speed, using adjustable fixing means (51).

2. Machine according to Claim 1, characterized in that the support ring (15) comprises means (18) for suspension from the hollow workpiece (5) which each consist of an angle member (21) connected at one end to the support ring (15) and having at the other end a sectional portion adapted to rest on an end portion of the hollow workpiece (5).

3. Machine according to either of Claims 1 and 2, characterized in that the screw adjustment means (19, 25) for positioning the support ring (15) are composed of three screws (25), each engaged in a nut (27) fastened to the support ring (15) and having a radially directed tapped bore, the nuts (27) being arranged at 120° intervals on the circumference of the ring (15) and the screws (25) being fastened to a shoe (26) at their end which bears on the hollow workpiece (5).

4. Machine according to any one of Claims 1, 2 and 3, characterized in that the support assemblies (20) of the guide ring (16) are each composed of a screw (30) having a spherical head (30a) and a nut (31) mounted for rotation about the axis of its bore on the support ring (15) and in engagement with the screw (30) in such a manner that, through its rotation, it displaces, in a direction at right angles to the plane of the ring (15) corresponding substantially to the direction of the rotation axis of the part to be machined, the head (30a) of the screw mounted pivotally in an articulation bearing (32, 33) integral with the guide ring (16).

5. Machine according to Claim 4, characterized in that each of the support assemblies (20) comprises a set screw (37) for locking the nut (31) of the screw (30) against rotation.

6. Machine according to any one of Claims 1 to 5, characterized in that the means (40) for displacing the adjustment ring (17) consist of screws (40) each of which engages in a radially directed tapped hole in the ring (17), each screw having a shoe (41) at its end directed towards the interior of the adjustment ring (17) to bring the screw to bear against the hollow workpiece (5).

7. Machine according to any one of Claims 1 to 6, characterized in that the means for fastening the adjustment ring (17) to the guide ring (16) consist of screws (42) passing through the adjustment ring in an axial direction by way of holes (44) which are larger than the diameter of the screw (42), which has a head which bears on the adjustment ring (17) around the hole (44), with an intermediate washer (43), the guide ring (16) having tapped holes (39) intended to cooperate with the screws (42) for securing the adjustment ring (17).

8. Use of a machine according to any one of Claims 1 to 7 for machining a chamfer for the connection of a steam generator at the end of a primary pipe (5) of a pressurized water nuclear reactor.

**Patentansprüche**

1. Senkgerät (10) an einem Drehabschnitt eines Hohlteiles (5) mit einem Gehäuse ( 50), an dem einstellbare Befestigungsmittel (51) fest angeordnet sind, die im Hohlteil die Drehachse (12) des Gerätes festlegen, und einem Gehäuseteil (54), das für eine Rotation um die Drehachse (12) am Gehäuse (50) beweglich angebracht ist und dabei die Ausrüstung des Senkgerätes trägt, so daß bei einer Vorrichtung zur Steuerung der Betriebslage und zur Einstellung der Drehachse des Gerätes die Vorrichtung zur Steuerung durch eine ringförmige Baugruppe gebildet wird, deren Innendurchmesser größer als der Außendurchmesser des Abschnitts von dem Hohlteil (5) ist, das bearbeitet werden soll, bestehend aus:

– einem ersten als Stützring bezeichneten Ring (15) mit Befestigungsmitteln (18, 19) am Hohlteil (5) rings um den Bearbeitungsabschnitt und Stellschrauben (25), die sich am Hohlteil (5) zur Lagesteuerung des Stützringes (15) in wenigstens zwei Richtungen senkrecht zur Drehachse des Bearbeitungsabschnitts abstützen, wobei wenigstens drei einstellbare Stützeinheiten (20) in regelmäßigen Abständen auf dem Kreisumfang des Stützringes (15) aufgeteilt sind,

– einem zweiten als Einstellring bezeichneten Ring (16) mit einer ebenen Oberfläche, der vom Stützring (15) mittels in ihrer Länge einstellbarer Stützeinheiten (20) getragen wird, die das Einstellen der Lage des Einstellringes (16) in Richtung auf die Drehachse des Bearbeitungsabschnittes und seine Einstellung bezüglich der Schnittebenen gerade auf den Bearbeitungsabschnitt zu senkrecht zur Drehachse gestatten,

– und einem dritten als Steuerungsring bezeichneten Ring (17), der vom Einstellring (16) getragen wird und Mittel (40) für sein Versetzen in wenigstens zwei Richtungen der Einstellringebene sowie Mittel (42) zu seiner Befestigung am Einstellring (16) aufweist, wobei der Steuerungsring (17) darüber hinaus wenigstens an einem Abschnitt (17a) seiner ebenen Oberfläche entgegengesetzt zur Ebene des Einstellringes (16) und wenigstens an einem Abschnitt (17b) seiner seitlichen Oberfläche Bereiche mit einer sehr hohen Oberflächenqualität aufweist, um zwei Bezugsoberflächen zur Steuerung des Bearbeitungsgerätes festzulegen, sowie einem Winkelstück (57), das an dem drehbeweglichen Gehäuseteil (54) des Gerätes befestigt ist und am Ort der Ausrüstung zwei Meßuhren trägt, die an je einem. Winkelarm angebracht sind, um in Kontakt mit dem ebenen Oberflächenabschnitt (17a) bzw. mit dem seitlichen Oberflächenabschnitt (17b) des Steuerungsringes zu gelangen, um die Bezugsoberflächen festzulegen, die die Steuerung der Drehachse des Gerätes während seiner Drehung mit langsamer Geschwindigkeit aufgrund der einstellbaren Befestigungsmittel (51) gestatten.

2. Gerät nach Anspruch 1, dadurch gekennzeichnet, daß der Stützring (15) Aufhängemittel (18) am Hohlteil (5) aufweist, die jeweils durch ein Winkelstück (21) gebildet werden, das an seinem einen Ende mit dem Stützring (15) verbunden ist und an seinem anderen Ende einen Profilabschnitt für eine Auflage auf einem Endabschnitt des Hohlteiles (5) aufweist.

3. Gerät nach Anspruch 1 oder 2, dadurch gekennzeichnet, daß die Stellschrauben (19, 25) für die Lage des Stützringes (15) durch drei Schrauben (25) gebildet werden, die jede in eine mit dem Stützring (15) fest verbundene Schraubenmutter (27) mit einer Gewindebohrung in radialer Richtung eingreift, wobei die Schraubenmuttern (27) im Winkel von 120° zueinander auf dem Umfang des Stützringes (15) angeordnet und die Schrauben (25) an ihrem Ende mit einem Führungsschuh (26) fest verbunden sind, der sich am Hohlteil (5) abstützt.

4. Gerät nach einem der Ansprüche 1, 2 oder 3, dadurch gekennzeichnet, daß die Stützeinheiten (20) des Einstellringes (16) jeweils durch eine Schraube (30) mit einem Kugelkopf (30a) und durch eine Schraubenmutter (31) gebildet werden, die um ihre Bohrungsachse drehbar auf dem Stützring (15) angebracht ist und derart im Eingriff mit der Schraube (30) steht, diese durch ihre Drehung senkrecht zur Ebene des Stützringes (15) entsprechend feinfühlig in der Richtung der Drehachse des Bearbeitungsabschnitts zu versetzen, wobei der Kopf (30a) der Schraube gelenkig in einem Gelenklager (32, 33) angeordnet ist, das mit dem Einstellring (16) fest verbunden ist.

5. Gerät nach Anspruch 4, dadurch gekennzeichnet, daß jede Stützeinheit (20) eine Körnerschraube (37) aufweist, um ein Drehen der Schraubenmutter (31) der Schraube (30) zu blockieren.

6. Gerät nach einem der Ansprüche 1 bis 5, dadurch gekennzeichnet, daß die Mittel (40) zum Versetzen des Steuerungsringes (17) Schrauben (40) sind, die jeweils in ein Gewindeloch radial zum Steuerungsring (17) eingreifen und einen Führungsschuh (41) an ihrem zum Innern des Steuerungsringes (17) gerichteten Ende aufweisen, um sich am Hohlteil (5) abzustützen.

7. Gerät nach einem der Ansprüche 1 bis 6, dadurch gekennzeichnet, daß die Mittel zum Befestigen des Steuerungsringes (17) am Einstellring (16) Schrauben (42) sind, die den Steuerungsring axial durch Löcher (44) durchqueren, deren Abmessungen größer als der Durchmesser der Schraube (42) sind, und die um das Loch (44) herum einen Kopf als Abstützung am Steuerungsring (17) mittels einer Unterlegscheibe (43) aufweisen, wobei der Einstellring (16) Gewindelöcher (39) aufweist, die mit den Schrauben (42) zur Befestigung des Steuerungsringes (17) zusammenwirken.

8. Anwendung eines Geräts nach einem der Ansprüche 1 bis 7 für die Senk-Verbindung eines Dampferzeugers am Ende einer Hauptleitung eines Druckwasser-Atomreaktors.

FIG.1

FIG.2

FIG.3

FIG.4a

FIG.4

FIG.4b

FIG.5

FIG.6

FIG.7

FIG.8a

FIG.8b

# FIG.10

# FIG.9